# EUROPEAN PATENT APPLICATION

(11) **EP 4 848 460 A1**
(43) Date of publication of application: **02.12.2026**
(21) Application number: 24943002.6
(22) Date of filing: 14.06.2024
(51) Int. Cl.: H01M 50/531

(54) **CYLINDRICAL BATTERY CELL, BATTERY, AND ELECTRIC DEVICE**

(71) Applicant: Contemporary Amperex Technology Co., Limited, Ningde, Fujian 352100 (CN)
(72) Inventor: WU, Guangjin, Ningde, Fujian 352100 (CN); MA, Ruoyan, Ningde, Fujian 352100 (CN); GUO, Zhijun, Ningde, Fujian 352100 (CN); SHI, Shengyun, Ningde, Fujian 352100 (CN); XIE, Chengbin, Ningde, Fujian 352100 (CN); LIU, Wenzhong, Ningde, Fujian 352100 (CN)
(74) Representative: Ziebig Hengelhaupt Intellectual Property Attorneys Patentanwaltskanzlei PartGmbB
(86) International application number: PCT/CN2024/099394
(87) International publication number: WO 2025/255839

(57) **Abstract**

A cylindrical battery cell (7), a battery (2), and an electric device. The cylindrical battery cell (7) comprises a casing (20), a first electrode lead-out portion (7a), an electrode assembly (10), and a current collecting member (40). The first electrode lead-out portion (7a) is provided in the casing (20). The electrode assembly (10) is accommodated in the casing (20) and comprises an electrode body (11) and a first tab (12) led out from the end portion of the electrode body (11). The current collecting member (40) is electrically connected to the first electrode lead-out portion (7a). The current collecting member (40) is welded to the first tab (12) and forms a plurality of welding mark groups (50), and the plurality of welding mark groups (50) are arranged at intervals in the circumferential direction (V) of the current collecting member (40). Each welding mark group (50) comprises a first welding mark (51) and a second welding mark (52). In a direction from the exterior of the electrode assembly (10) to a central axis (C) of the electrode assembly (10), the first welding mark (51) has a first end (511) close to the central axis (C) and a second end (512) away from the central axis (C), and the second welding mark (52) has a third end (521) close to the central axis (C) and a fourth end (522) away from the central axis (C). The extension length of the first welding mark (51) is greater than that of the second welding mark (52), and the distance between the third end (521) and the second end (512) is less than the distance between the third end (521) and the first end (511).

## Description

### TECHNICAL FIELD

The present application relates to the technical field of batteries, and in particular, to a cylindrical battery cell, a battery, and an electric device.

### BACKGROUND

Battery cells, particularly cylindrical battery cells, are widely used in electronic devices, such as mobile phones, laptop computers, electric bicycles, electric vehicles, electric airplanes, electric ships, electric toy cars, electric toy ships, electric toy airplanes, and electric tools.

In the development of battery technologies, how to improve the reliability of cylindrical battery cells is a research direction in the battery technologies.

### SUMMARY

The present application provides a cylindrical battery cell, a battery, and an electric device, which can improve the reliability.

In a first aspect, embodiments of the present application provide a cylindrical battery cell. The cylindrical battery cell includes a housing, a first electrode lead-out part, an electrode assembly, and a current collecting member. The first electrode lead-out part is disposed in the housing. The electrode assembly is accommodated in the housing. The electrode assembly is of a wound structure and includes an electrode main body and a first tab led out from an end part of the electrode main body. The current collecting member is electrically connected to the first electrode lead-out part. The current collecting member is located on a side, distal to the electrode main body, of the first tab, the current collecting member is welded to the first tab and forms a plurality of weld mark groups, and the plurality of weld mark groups are spaced apart from each other in a circumferential direction of the current collecting member. Each weld mark group includes at least one first weld mark and at least one second weld mark; in a direction from an exterior of the electrode assembly toward a central axis of the electrode assembly, the first weld mark and the second weld mark extend linearly, the first weld mark is provided with a first end proximal to the central axis and a second end distal to the central axis, and the second weld mark is provided with a third end proximal to the central axis and a fourth end distal to the central axis. An extension length of the first weld mark is greater than an extension length of the second weld mark, and a distance between the third end and the second end is less than a distance between the third end and the first end.

The first weld mark has a large extension length, enabling it to simultaneously transmit the current from a portion, proximal to the central axis, of the first tab and the current from a portion, distal to the central axis, of the first tab. The portion, distal to the central axis, of the first tab has a larger circumferential length and requires a larger current passage area. The second weld mark is disposed outwardly relative to the first end, and can transmit the current from the portion, distal to the central axis, of the first tab together with the first weld mark, thereby improving the current passage capacity, reducing the temperature rise, improving the fast charging capability of the battery cell, and improving the cycle performance and reliability of the battery cell.

The farther the first tab is away from the central axis, the larger the dimensions of the first tab and the current collecting member in the circumferential direction are. Disposing the second weld mark, which has a smaller extension length, outwardly can increase the distance between the first weld mark and the second weld mark, thereby reducing heat accumulation during the welding process, reducing the temperature rise, and improving the reliability. The portion, proximal to the central axis, of the first tab has a smaller circumferential length and is located closer to the first end. Therefore, the portion, proximal to the central axis, of the first tab requires a smaller current passage area, and the second weld mark can be shortened to reduce heat generation during welding, simplify the welding process, and improve the reliability.

In the embodiments of the present application, by using two types of weld marks, namely the first weld mark and the second weld mark having different extension lengths, and by arranging the second weld mark in an outward region of the first tab, the current passage area between the current collecting member and the tab is increased, heat accumulation during the formation of the weld marks is reduced, the temperature rise is reduced, and the reliability and cycle performance of the battery cell are improved.

In some embodiments, the first weld mark and the second weld mark both extend along a straight line. Using linear first and second weld marks can simplify the welding process and reduce the assembly difficulty of the battery cell.

In some embodiments, the first weld mark extends in a radial direction of the current collecting member; and/or the second weld mark extends in the radial direction of the current collecting member. Given a certain extension length, configuring the first weld mark to extend in the radial direction of the current collecting member and configuring the second weld mark to extend in the radial direction of the current collecting member can both improve the current passage capacity between the current collecting member and the first tab.

In some embodiments, the weld mark group includes two first weld marks. By providing the two first weld marks, the current passage capacity between the current collecting member and the first tab can be further improved. By increasing the number of first weld marks in the weld mark group, the required number of weld mark groups can be reduced.

In some embodiments, in the circumferential direction of the current collecting member, the third end is located between two adjacent first weld marks. Using the space between the two first weld marks to dispose the second weld mark can improve the space utilization rate. Compared with a solution where the second weld mark is disposed on an outer side of the two first weld marks, the embodiments of the present application can increase the spacing between the two first weld marks, reduce heat accumulation, and reduce the risk of repeated welding.

In some embodiments, in the circumferential direction of the current collecting member, the fourth end is located between two adjacent first weld marks. During the welding of the current collecting member and the first tab, the fourth end of the second weld mark can take the second end of the first weld mark as a reference, thereby reducing the risk of welding outside the current collecting member, and improving the reliability.

In some embodiments, the weld mark group further includes a third weld mark, and the third weld mark connects the first ends of two first weld marks. The third end is spaced apart from the third weld mark. The two first weld marks and the third weld mark are integrally connected, which can increase the current passage area and reduce the temperature rise of the battery cell during cycling. Compared with a solution where two first weld marks are formed in two welding processes, the embodiments of the present application allow the two first weld marks and the third weld mark to be completed in a single welding process, thereby reducing the risk of welding spatter and improving the welding efficiency.

In some embodiments, at least a portion of the third weld mark is in a circular arc shape. The circular arc shape allows for a smoother transition in the welding direction, reducing the risk of welding spatter and improving the welding quality.

In some embodiments, the first weld mark extends in a radial direction of the current collecting member. The current collecting member includes a first sector-shaped region and a second sector-shaped region, and in the circumferential direction of the current collecting member, the first sector-shaped region is located between two first weld marks of the weld mark group, and the second sector-shaped region is located between adjacent weld mark groups. A central angle of the second sector-shaped region is greater than a central angle of the first sector-shaped region.

When the current collecting member and the first tab are welded, an external device may abut against the second sector-shaped region and press the current collecting member tightly against the first tab, so as to enable the current collecting member to be attached to the first tab during the welding process, reducing the risk of false welding. The second sector-shaped region has a relatively large area, which can increase the pressure-bearing area of the current collecting member and improve the welding stability.

In some embodiments, a ratio of the extension length L2 of the second weld mark to the extension length L1 of the first weld mark is 0.1 to 0.5. Defining L2/L1 to be greater than or equal to 0.1 can improve the current passage capacity of the second weld mark and reduce the temperature rise of the battery cell during cycling. Defining L2/L1 to be less than or equal to 0.5 can ensure that a minimum spacing between the second weld mark and the first weld mark meets requirements.

In some embodiments, a minimum spacing between the fourth end and the central axis is less than or equal to a minimum spacing between the second end and the central axis. During the welding of the current collecting member and the first tab, the fourth end of the second weld mark can take the second end of the first weld mark as a reference, thereby reducing the risk of welding outside the current collecting member, and improving the reliability.

In some embodiments, in the circumferential direction of the current collecting member, a maximum spacing between two adjacent weld mark groups is greater than a maximum dimension of the weld mark group. Adjacent weld mark groups are spaced apart by a relatively large distance. In other words, in addition to the region requiring welding, the current collecting member also has a relatively large region against which an external device can press. When the current collecting member and the first tab are welded, the external device may press the current collecting member tightly against the first tab, so as to enable the current collecting member to be attached to the first tab during the welding process, reducing the risk of false welding.

In some embodiments, a plurality of recesses are provided on a side, facing away from the first tab, of the current collecting member, and the plurality of recesses are spaced apart from each other in the circumferential direction of the current collecting member. A bottom wall of each recess is welded to the first tab and forms the weld mark group. During welding, the recess can be used for positioning, facilitating the welding device in capturing the welding position and improving the welding efficiency. The external device may press against a non-recessed region of the current collecting member, so as to enable the current collecting member to be attached to the first tab during the welding process, reducing the risk of false welding.

In some embodiments, at least a portion of the first electrode lead-out part is located on a side, facing away from the first tab, of the current collecting member and abuts against the current collecting member. The plurality of weld mark groups are arranged along an outer periphery of the first electrode lead-out part, and each weld mark group is spaced apart from the first electrode lead-out part. Due to the welding process, the flatness of the weld mark groups is relatively poor. In the embodiments of the present application, the weld mark groups are disposed to avoid the first electrode lead-out part, such that the current collecting member can be attached to the first electrode lead-out part, thereby improving the stability of the connection between the current collecting member and the first electrode lead-out part.

In some embodiments, a width W2 of the second weld mark is 0.5 to 2 times a width W1 of the first weld mark. Defining W2/W1 to be greater than or equal to 0.5 can provide the second weld mark with a relatively large current passage area, reducing the temperature rise of the battery cell during cycling. Defining W2/W1 to be less than or equal to 2 saves space occupied by the second weld mark in the circumferential direction of the current collecting member, increases the minimum spacing between the second weld mark and the first weld mark, reduces heat accumulation during the welding process, and improves the reliability.

In some embodiments, a minimum spacing D1 between the third end and the first weld mark is greater than or equal to 0.5 times a width W1 of the first weld mark. During welding, the width W1 of the first weld mark is related to both welding power and heat generation during welding. The embodiments of the present application define D1/W1 to be greater than or equal to 0.5 to reduce heat accumulation during welding, reduce the risk of spatter caused by the joint between the first weld mark and the second weld mark, and improve the reliability.

In some embodiments, the first tab is wound to form N winding turns, the second weld mark is connected to M winding turns, and 0.05 ≤ M/N ≤ 0.4.

Defining M/N to be greater than or equal to 0.05 allows the second weld mark to be connected to a relatively large number of winding turns, increasing the current passage area between the winding turns distal to the central axis and the current collecting member, improving the current passage capacity, reducing the temperature rise, and improving the cycle performance of the battery cell. Defining M/N to be less than or equal to 0.4 increases the distance between the third end and the central axis and the distance between the third end and the first end, reducing heat accumulation during welding and improving the reliability.

In some embodiments, the housing includes a wall part, and the first electrode lead-out part is an electrode terminal disposed on the wall part in an insulated manner; or the housing includes a housing body and an end cover, the housing body is provided with an opening, the end cover lids the opening, and the first electrode lead-out part is at least a portion of one of the housing body and the end cover.

In some embodiments, the current collecting member is provided with a channel, and the channel penetrates through the current collecting member in a thickness direction of the current collecting member. In the circumferential direction of the current collecting member, at least a portion of the channel is located between adjacent weld mark groups. In the case of an accidental thermal runaway of the battery cell, substances generated by the reaction of the electrode assembly can pass through the current collecting member via the channel, so as to be promptly discharged to the exterior of the housing, reducing the risk of explosion. Forming the channel in a portion, located between the weld mark groups, of the current collecting member allows both the current passage capacity and the gas discharge capacity of the current collecting member to be taken into account.

In some embodiments, a height of the housing is 1.3 to 4 times a diameter of the housing.

In some embodiments, a height of the housing is 50 mm to 150 mm.

In some embodiments, a diameter of the housing is 40 mm to 80 mm.

In a second aspect, the embodiments of the present application provide a battery. The battery includes a plurality of cylindrical battery cells according to any one of the embodiments of the first aspect.

In a third aspect, the embodiments of the present application provide an electric device. The electric device includes the battery according to any one of the embodiments of the second aspect. The battery is configured to provide electrical energy.

### BRIEF DESCRIPTION OF THE DRAWINGS

To more clearly illustrate the technical solutions according to embodiments of the present application, the drawings required for illustrating the embodiments of the present application are briefly described below. Apparently, the drawings in the following description illustrate merely some embodiments of the present application, and those of ordinary skill in the art may still derive other drawings from these drawings without creative efforts.
FIG. 1 is a schematic structural diagram of a vehicle according to some embodiments of the present application;
FIG. 2 is an exploded schematic view of a battery according to some embodiments of the present application;
FIG. 3 is a schematic structural diagram of the battery module shown in FIG. 2;
FIG. 4 is a schematic structural diagram of a cylindrical battery cell according to some embodiments of the present application;
FIG. 5 is an exploded schematic view of the cylindrical battery cell shown in FIG. 4;
FIG. 6 is a cross-sectional schematic view of the cylindrical battery cell shown in FIG. 4;
FIG. 7 is a schematic diagram of an electrode assembly of a cylindrical battery cell according to some embodiments of the present application;
FIG. 8 is a schematic diagram of an electrode assembly and a current collecting member, after welding, of a cylindrical battery cell according to some embodiments of the present application;
FIG. 9 is an enlarged schematic view of a circled portion in FIG. 6;
FIG. 10 is a schematic diagram of an electrode assembly and a current collecting member according to some other embodiments of the present application;
FIG. 11 is a schematic diagram of an electrode assembly and a current collecting member according to still some other embodiments of the present application;
FIG. 12 is a cross-sectional schematic view taken along an A-A direction in FIG. 11;
FIG. 13 is an enlarged schematic view of a circled portion in FIG. 12;
FIG. 14 is a schematic diagram of an electrode assembly and a current collecting member according to some embodiments of the present application.

Reference numerals in the drawings are explained as follows:
1. vehicle; 2. battery; 3. controller; 4. motor; 5. case; 5a. first case part; 5b. second case part; 5c. accommodating space; 6. battery module; 7. cylindrical battery cell; 7a. first electrode lead-out part; 7b. second electrode lead-out part;
10. electrode assembly; 11. electrode main body; 12. first tab; 13. second tab;
20. housing; 21. housing body; 211. end wall; 212. side wall; 22. end cover;
30. electrode terminal; 31. terminal main body; 311. terminal recess; 32. cover plate;
40. current collecting member; 41. first sector-shaped region; 42. second sector-shaped region; 43. recess; 44. protrusion; 45. channel; 451. linear channel; 452. first hole; 453. second hole;
50. weld mark group; 51. first weld mark; 511. first end; 512. second end; 52. second weld mark; 521. third end; 522. fourth end; 53. third weld mark; C. central axis;
V. circumferential direction; X. winding direction; Z. axial direction.

### DETAILED DESCRIPTION

To make the objectives, technical solutions, and advantages of embodiments of the present application clearer, the technical solutions in the embodiments of the present application will be clearly described hereinafter with reference to the drawings in the embodiments of the present application. It is apparent that the described embodiments are some, but not all, embodiments of the present application. Based on the embodiments in the present application, all other embodiments obtained by those of ordinary skill in the art without creative efforts shall fall within the protection scope of the present application.

Unless otherwise defined, all technical and scientific terms used in the present application have the same meaning as commonly understood by those skilled in the art to which the present application belongs. The terms used in the specification of the present application are only used to describe specific embodiments and are not intended to limit the present application. The terms "include", "comprise", "have", "provided with", and any variants thereof in the specification and claims of the present application and the above description of the drawings are intended to cover a non-exclusive inclusion. The terms "first", "second", and the like in the specification and claims of the present application and the above drawings are used to distinguish different objects and are not intended to describe a specific order or priority.

Reference in the present application to "embodiment" means that a particular feature, structure, or characteristic described in connection with the embodiment can be included in at least one embodiment of the present application. The references of the word in the context of the specification do not necessarily refer to the same embodiment, nor to separate or alternative embodiments exclusive of other embodiments.

In the description of the present application, it should be noted that unless otherwise explicitly specified or limited, the terms "mount", "interconnect", "connect", and "attach" shall be construed broadly and may be, for example, fixed connection, detachable connection, or integrated connection, or direct connection, indirect connection via an intermediate, or a communication between interiors of two elements. For those of ordinary skill in the art, the specific meanings of the above terms in the present application can be understood based on specific conditions.

In the present application, the term "and/or" is merely a way to describe the association relationship between associated objects and indicates that there may be three relationships. For example, A and/or B may indicate that: only A is present, both A and B are present, and only B is present. In addition, the character "/" in the present application generally indicates an "or" relationship between the associated objects before and after the "/".

In the embodiments of the present application, the same reference numerals represent the same components, and for the sake of brevity, detailed descriptions of the same components are omitted in different embodiments. It should be understood that the thickness, length, width, and other dimensions of various components in the embodiments of the present application shown in the drawings, as well as the overall thickness, length, width, and other dimensions of the integrated device, are only exemplary and should not be construed as limiting the present application in any way.

The term "plurality of" used in the present application refers to no less than two (including two).

A cylindrical battery cell may be a secondary battery, which refers to a battery cell that can continue to be used by activating the active material through charging after discharging.

A battery may refer to a single physical module that includes one or more cylindrical battery cells to provide higher voltage and capacity.

The cylindrical battery cell generally includes an electrode assembly. The electrode assembly includes a positive electrode and a negative electrode. During the charging and discharging process of the cylindrical battery cell, active ions (such as lithium ions) are intercalated and deintercalated back and forth between the positive electrode and the negative electrode. Optionally, the electrode assembly includes a separator disposed between the positive electrode and the negative electrode, and the separator can prevent short circuit between the positive electrode and the negative electrode and allow the passage of active ions.

Illustratively, both the positive electrode and the negative electrode are provided with tabs for transmitting current.

The cylindrical battery cell is generally provided with an electrode lead-out part and a current collecting member. The current collecting member is configured to connect the tab and the electrode lead-out part. The electrode lead-out part may be configured to be connected to an external circuit to enable charging and discharging of the cylindrical battery cell.

Generally, the current collecting member is connected to the tab by welding. In the related art, the current collecting member and the tab form a plurality of linear weld marks, and the plurality of weld marks are arranged radially. However, in a cylindrical battery cell, the tab is generally of a circular structure, and the distance between inner ends of the plurality of weld marks is relatively small. During the welding process, heat is likely to accumulate in the middle part of the tab, resulting in a risk of short circuit due to thermal deformation of the separator. In addition, due to the distance between the inner ends of the weld marks, the number of weld marks is also limited, which affects the welding area of the portion of the tab proximal to the edge, resulting in abnormal temperature rise of the tab and the current collecting member under high-current operating conditions, thereby affecting the reliability of the battery cell.

In view of this, the embodiments of the present application provide a technical solution, which, by using two types of weld marks having different lengths and arranging the shorter weld mark in an outward region of the tab, increases the current passage area between the current collecting member and the tab, reduces heat accumulation during the formation of the weld marks, reduces the temperature rise, and improves the reliability and cycle performance of the battery cell.

The cylindrical battery cell described in the embodiments of the present application is applicable to batteries and electric devices that use batteries.

The electric device disclosed in the embodiments of the present application can be a device that uses batteries as the power source or various energy storage systems that use batteries as the energy storage element. The electric device may be, but is not limited to, a mobile phone, a tablet, a laptop computer, an electric toy, an electric tool, an electric bicycle, an electric vehicle, a ship, a spacecraft, or the like. The electric toy may include stationary or mobile electric toys, such as game consoles, electric car toys, electric ship toys, or electric airplane toys. The spacecraft may include airplanes, rockets, space shuttles, spaceships, and the like.

For ease of explanation, the following embodiments will be described by taking a vehicle as an example of the electric device.

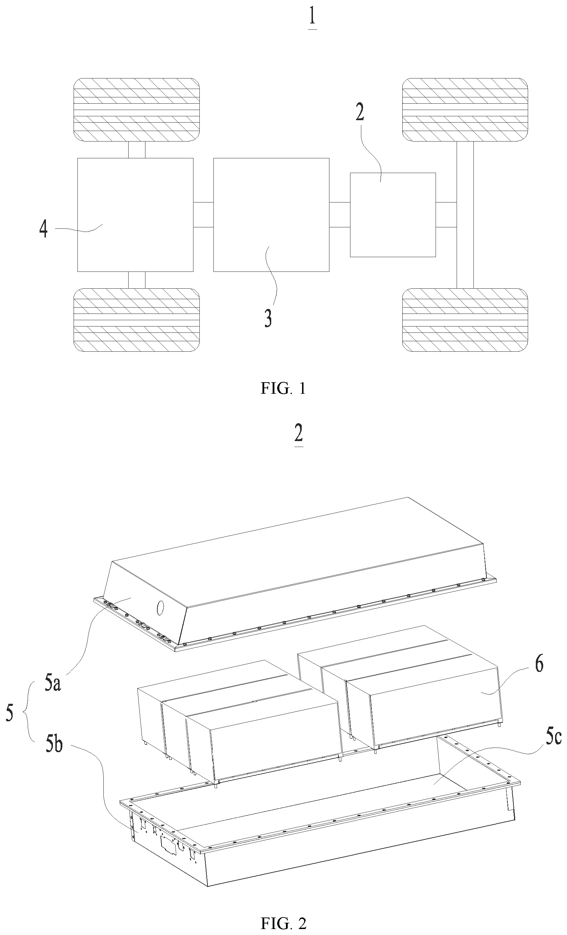

FIG. 1 is a schematic structural diagram of a vehicle according to some embodiments of the present application.

As shown in FIG. 1, a battery 2 is disposed inside a vehicle 1, and the battery 2 may be disposed at the bottom, head, or tail of the vehicle 1. The battery 2 may be configured to power the vehicle 1. For example, the battery 2 may serve as an operation power source for the vehicle 1.

The vehicle 1 may further include a controller 3 and a motor 4. The controller 3 is configured to control the battery 2 to power the motor 4, e.g., for the operation power needed by the vehicle 1 for start-up, navigation, and driving.

In some embodiments of the present application, the battery 2 may not only serve as the operation power source for the vehicle 1, but also as a driving power source for the vehicle 1 to, replacing or partially replacing fuel or natural gas, provide driving power for the vehicle 1.

FIG. 2 is an exploded schematic view of a battery according to some embodiments of the present application. As shown in FIG. 2, the battery 2 includes a case 5 and a cylindrical battery cell (not shown in FIG. 2). The cylindrical battery cell is accommodated in the case 5.

The case 5 is configured to accommodate the cylindrical battery cell, and the case 5 may be of various structures. In some embodiments, the case 5 may include a first case part 5a and a second case part 5b. The first case part 5a and the second case part 5b are mutually lidded with each other. The first case part 5a and the second case part 5b jointly define an accommodating space 5c for accommodating the cylindrical battery cell. The second case part 5b may be of a hollow structure with one end open, the first case part 5a is of a plate-like structure, and the first case part 5a lids the open side of the second case part 5b to form the case 5 having the accommodating space 5c. The first case part 5a and the second case part 5b may each also be of a hollow structure with one end open, and the open side of the first case part 5a lids the open side of the second case part 5b to form the case 5 having the accommodating space 5c. Certainly, the first case part 5a and the second case part 5b may be of various shapes, such as a cylinder and a rectangular parallelepiped.

To improve the sealing performance after the first case part 5a and the second case part 5b are connected, a sealing member, such as a sealant or a seal ring, may be further provided between the first case part 5a and the second case part 5b.

If the first case part 5a lids the top part of the second case part 5b, the first case part 5a may also be referred to as an upper case cover, and the second case part 5b may also be referred to as a lower case body.

In the battery 2, one or a plurality of cylindrical battery cells may be provided. If a plurality of cylindrical battery cells are provided, the plurality of cylindrical battery cells may be connected in series, in parallel, or in series-parallel. The series-parallel connection means that both series connection and parallel connection are present for the connection among the plurality of cylindrical battery cells. The plurality of cylindrical battery cells may be directly connected in series, in parallel, or in series-parallel, and then the whole formed by the plurality of cylindrical battery cells is accommodated in the case 5. Certainly, the situation may be that the plurality of cylindrical battery cells are first connected in series, in parallel, or in series-parallel to form battery modules 6, and then the plurality of battery modules 6 are connected in series, in parallel, or in series-parallel to form a whole and accommodated in the case 5.

The cylindrical battery cell may be the smallest unit constituting the battery.

In some embodiments, the case 5 may be a portion of the chassis structure of the vehicle. For example, a portion of the case 5 may become at least a portion of the floor of the vehicle, or a portion of the case 5 may become at least a portion of the crossbeam and the longitudinal beam of the vehicle.

In some embodiments, the battery 2 may be an energy storage device. The energy storage device includes an energy storage container, an energy storage electrical cabinet, and the like.

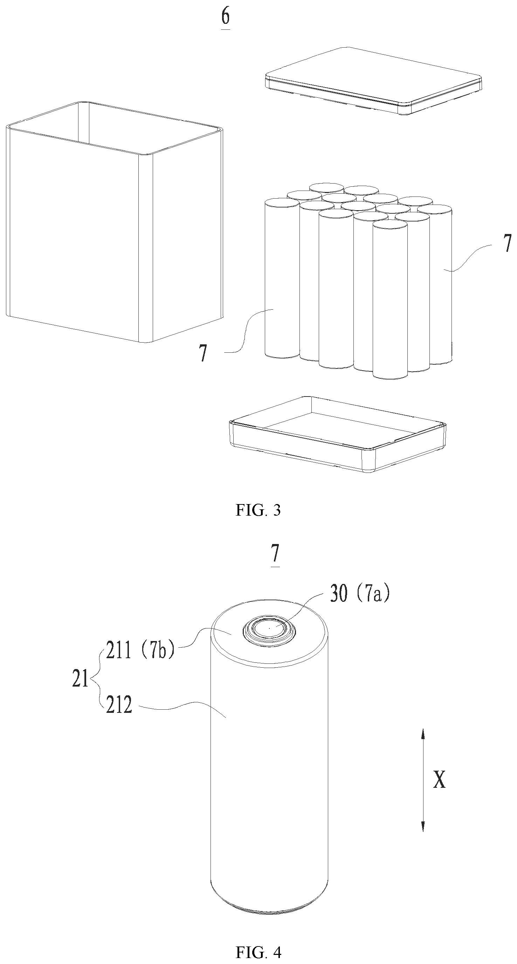

FIG. 3 is a schematic structural diagram of the battery module shown in FIG. 2.

In some embodiments, as shown in FIG. 3, a plurality of cylindrical battery cells 7 are provided, and the plurality of cylindrical battery cells 7 are first connected in series, in parallel, or in series-parallel to form the battery module 6. The plurality of battery modules 6 are then connected in series, in parallel, or in series-parallel to form a whole and accommodated in the case.

The plurality of cylindrical battery cells 7 in the battery module 6 may be electrically connected via a busbar component to achieve parallel connection, series connection, or series-parallel connection among the plurality of cylindrical battery cells 7 in the battery module 6. One or a plurality of busbar components may be provided, and each busbar component is configured to electrically connect at least two cylindrical battery cells 7.

The cylindrical battery cell may be a lithium-ion battery cell, a sodium-ion battery cell, a sodium-lithium-ion battery cell, a lithium metal battery cell, a sodium metal battery cell, a lithium-sulfur battery cell, a magnesium-ion battery cell, a nickel-hydrogen battery cell, a nickel-cadmium battery cell, a lead storage battery cell, or the like.

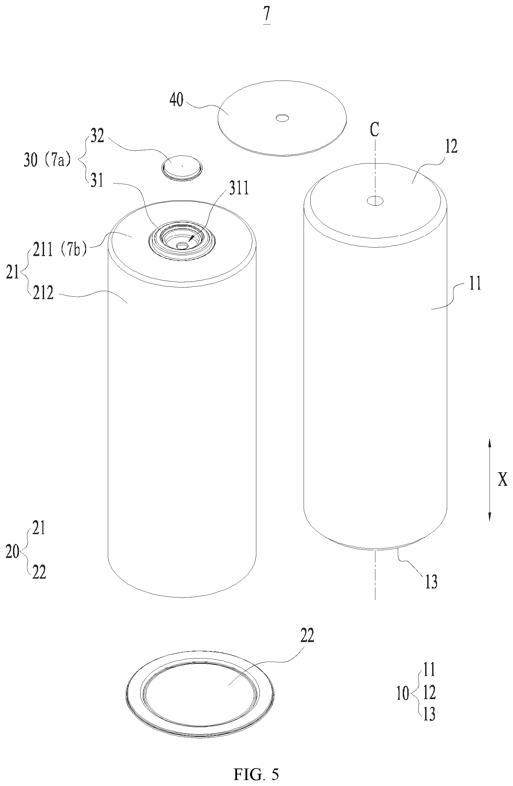

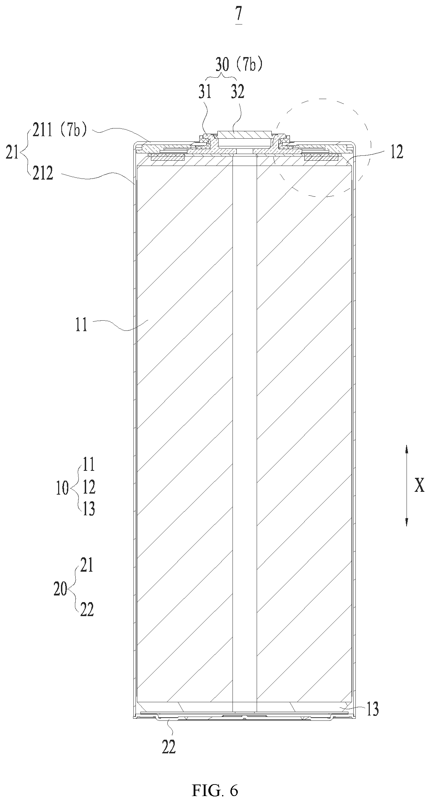

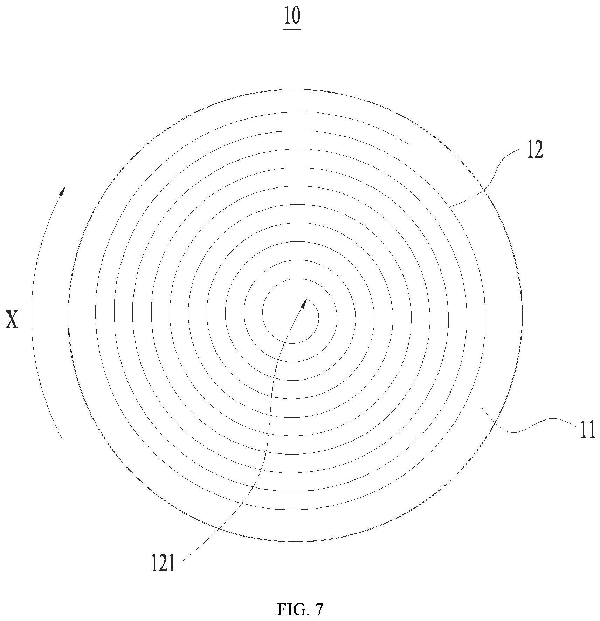

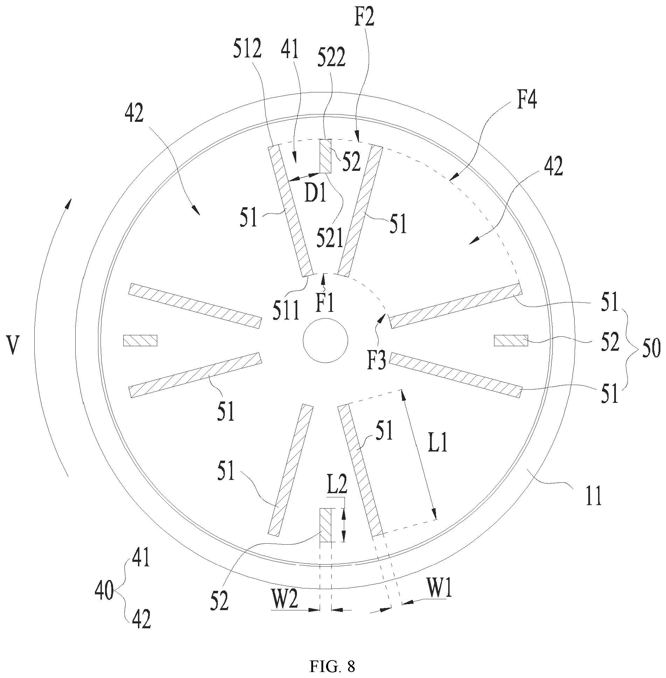

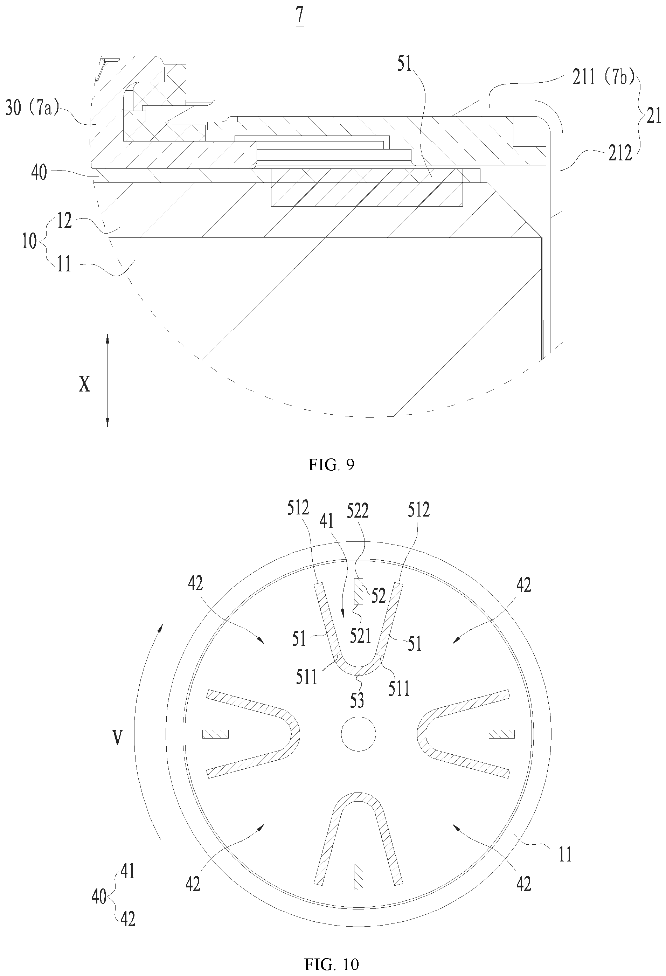

FIG. 4 is a schematic structural diagram of a cylindrical battery cell according to some embodiments of the present application; FIG. 5 is an exploded schematic view of the cylindrical battery cell shown in FIG. 4; FIG. 6 is a cross-sectional schematic view of the cylindrical battery cell shown in FIG. 4; FIG. 7 is a schematic diagram of an electrode assembly of a cylindrical battery cell according to some embodiments of the present application; FIG. 8 is a schematic diagram of an electrode assembly and a current collecting member, after welding, of a cylindrical battery cell according to some embodiments of the present application; and FIG. 9 is an enlarged schematic view of a circled portion in FIG. 6.

Referring to FIGs. 4 to 9, the embodiments of the present application provide a cylindrical battery cell 7. The cylindrical battery cell includes a housing 20 and an electrode assembly 10. At least a portion of the electrode assembly 10 is accommodated in the housing 20.

The housing 20 is of a hollow structure. An accommodating space for accommodating the electrode assembly 10 and the electrolyte is formed inside the housing. The housing 20 of the cylindrical battery cell 7 is a cylindrical housing.

As an example, the housing 20 includes a housing body 21 and an end cover 22. The housing body 21 is provided with an opening, and the end cover 22 is configured to lid the opening.

The housing body 21 is a component configured to form the internal cavity of the cylindrical battery cell 7 in combination with the end cover 22. The formed internal cavity may be used to accommodate the electrode assembly 10, the electrolyte, and other components.

The housing body 21 and the end cover 22 may be separate components. Illustratively, an opening may be formed in the housing body 21, and the end cover 22 lids the opening to form the internal cavity of the cylindrical battery cell 7.

The housing body 21 may be made of various materials, such as copper, iron, aluminum, stainless steel, and aluminum alloy.

The shape of the end cover 22 may be adapted to the shape of the housing body 21 to match the housing body 21. The end cover 22 and the housing body 21 may be made of the same or different materials. Optionally, the end cover 22 may be made of a material with a certain hardness and strength (e.g., copper, iron, aluminum, stainless steel, aluminum alloy, or plastic), such that the end cover 22 is not easily deformed when being compressed or collided. This provides the cylindrical battery cell 7 with higher structural strength and improved reliability.

The end cover 22 is connected to the housing body 21 by welding, bonding, snap-fitting, or other methods.

The housing body 21 may have one end open, or may have two ends open. In some examples, the housing body 21 may be of a structure with one side open. One end cover 22 is provided and lids the housing body 21. In some other examples, the housing body 21 may also be of a structure with two sides open. Two end covers 22 are provided, and the two end covers 22 lid the two openings of the housing body 21, respectively.

The electrode assembly 10 is a component where the electrochemical reaction occurs in the cylindrical battery cell 7. One or more electrode assemblies 10 may be accommodated in the housing body 21.

The electrode assembly 10 includes a positive electrode and a negative electrode. During the charging and discharging process of the battery cell, active ions (such as lithium ions) are intercalated and deintercalated back and forth between the positive electrode and the negative electrode.

In some embodiments, the positive electrode may be a positive electrode plate, and the positive electrode plate may include a positive electrode current collector and a positive electrode film layer disposed on at least one surface of the positive electrode current collector.

As an example, the positive electrode current collector has two surfaces opposite to each other in its own thickness direction, and the positive electrode film layer is disposed on either or both of the two opposite surfaces of the positive electrode current collector.

As an example, a metal foil or a composite current collector may be used as the positive electrode current collector. For example, for the metal foil, aluminum or stainless steel treated with silver on the surface, stainless steel, copper, aluminum, nickel, carbon electrode, carbon, nickel, titanium, or the like may be used. The composite current collector may include a polymer material base layer and a metal layer. The composite current collector may be formed by forming a metal material (aluminum, aluminum alloy, nickel, nickel alloy, titanium, titanium alloy, silver, silver alloy, or the like) on a polymer material substrate (such as a substrate made of polypropylene, polyethylene terephthalate, polybutylene terephthalate, polystyrene, and polyethylene).

As an example, the positive electrode film layer includes a positive electrode active material, and the positive electrode active material may include at least one of the following materials: a lithium-containing phosphate, a lithium transition metal oxide, and respective modified compounds thereof. However, the present application is not limited to these materials, and other conventional materials that can be used as positive electrode active materials for batteries may also be used. These positive electrode active materials may be used alone or in a combination of two or more. Examples of the lithium-containing phosphate may include, but are not limited to, at least one of lithium iron phosphate (such as LiFePO₄ (also referred to as LFP)), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon. Examples of the lithium transition metal oxide may include, but are not limited to, at least one of a lithium cobalt oxide (such as LiCoO₂), a lithium nickel oxide (such as LiNiO₂), a lithium manganese oxide (such as LiMnO₂ or LiMn₂O₄), a lithium nickel cobalt oxide, a lithium manganese cobalt oxide, a lithium nickel manganese oxide, a lithium nickel cobalt manganese oxide (such as LiNi_{1/3}Co_{1/3}Mn_{1/3}O₂ (also referred to as NCM₃₃₃), LiNi_{0.5}Co_{0.2}Mn_{0.3}O₂ (also referred to as NCM₅₂₃), LiNi_{0.5}Co_{0.25}Mn_{0.25}O₂ (also referred to as NCM₂₁₁), LiNi_{0.6}Co_{0.2}Mn_{0.2}O₂ (also referred to as NCM₆₂₂), LiNi_{0.8}Co_{0.1}Mn_{0.1}O₂ (also referred to as NCM₈₁₁)), a lithium nickel cobalt aluminum oxide (such as LiNi_{0.80}Co_{0.15}Al_{0.05}O₂), and modified compounds thereof.

In some embodiments, a foam metal or a foam carbon may be used as the positive electrode. The foam metal may be foam nickel, foam copper, foam aluminum, a foam alloy, or the like. When the foam metal is used as the positive electrode, the surface of the foam metal may not be provided with the positive electrode film layer. Certainly, the positive electrode film layer may also be provided. As an example, a lithium source material, a potassium metal, or a sodium metal may also be incorporated into and/or deposited in the foam metal; the lithium source material is a lithium metal and/or a lithium-rich material.

In some embodiments, the negative electrode may be a negative electrode plate, and the negative electrode plate may include a negative electrode current collector.

As an example, a metal foil, a foam metal, a foam carbon, or a composite current collector may be used as the negative electrode current collector. For example, for the metal foil, aluminum or stainless steel treated with silver on the surface, stainless steel, copper, aluminum, nickel, carbon electrode, carbon, nickel, titanium, or the like may be used. The foam metal may be foam nickel, foam copper, foam aluminum, a foam alloy, or the like. The composite current collector may include a polymer material base layer and a metal layer. The composite current collector may be formed by forming a metal material (copper, copper alloy, nickel, nickel alloy, titanium, titanium alloy, silver, silver alloy, or the like) on a polymer material substrate (such as a substrate made of polypropylene, polyethylene terephthalate, polybutylene terephthalate, polystyrene, and polyethylene).

As an example, the negative electrode plate may include a negative electrode current collector and a negative electrode film layer disposed on at least one surface of the negative electrode current collector.

As an example, the negative electrode current collector has two surfaces opposite to each other in its own thickness direction, and the negative electrode film layer is disposed on either or both of the two opposite surfaces of the negative electrode current collector.

As an example, the negative electrode film layer includes a negative electrode active material. As an example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, the present application is not limited to these materials, and other conventional materials that can be used as negative electrode active materials for batteries may also be used. These negative electrode active materials may be used alone or in combination of two or more.

In some embodiments, the material of the positive electrode current collector may be aluminum, and the material of the negative electrode current collector may be copper.

In some embodiments, the electrode assembly 10 further includes a separator disposed between the positive electrode and the negative electrode. The separator can prevent short circuit between the positive electrode and the negative electrode and allow the passage of active ions.

In some embodiments, the separator is a separation film. Any porous-structure separation film known to have good chemical stability and mechanical stability may be selected and used in the embodiments of the present application.

As an example, the main material of the separation film may be selected from at least one of glass fiber, non-woven fabric, polyethylene, polypropylene, polyvinylidene fluoride, and ceramic. The separation film may be a single-layer film or a multi-layer composite film. When the separation film is a multi-layer composite film, the materials of the layers may be the same or different. The separator may be a separate component located between the positive electrode and the negative electrode, or may be attached to the surfaces of the positive electrode and the negative electrode.

In some embodiments, the separator is a solid-state electrolyte. The solid-state electrolyte is disposed between the positive electrode and the negative electrode, serving both to transport ions and to isolate the positive electrode from the negative electrode.

In some embodiments, the cylindrical battery cell 7 further includes an electrolyte that serves to conduct ions between the positive electrode and the negative electrode. In the present application, the type of the electrolyte may be selected according to requirements. The electrolyte may be liquid-state, gel-state, or solid-state.

The liquid-state electrolyte includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone. The solvent may also be selected from an ether solvent. The ether solvent may include one or more of ethylene glycol dimethyl ether, ethylene glycol diethyl ether, diethylene glycol dimethyl ether, triethylene glycol dimethyl ether, tetraethylene glycol dimethyl ether, 1,3-dioxolane, tetrahydrofuran, methyl tetrahydrofuran, diphenyl ether, and crown ether.

The gel-state electrolyte includes a skeleton network with a polymer as an electrolyte, combined with an ionic liquid-lithium salt.

The solid-state electrolyte includes a polymer solid-state electrolyte, an inorganic solid-state electrolyte, and a composite solid-state electrolyte.

As an example, the polymer solid-state electrolyte may be polyether (polyethylene oxide), polysiloxane, polycarbonate, polyacrylonitrile, polyvinylidene fluoride, polymethyl methacrylate, single-ion polymer, polyionic liquid-lithium salt, cellulose, or the like.

As an example, the inorganic solid-state electrolyte may be one or more of an oxide solid electrolyte (crystalline perovskite, sodium superionic conductor, garnet, and amorphous LiPON thin film), a sulfide solid electrolyte (crystalline lithium superionic conductor (lithium germanium phosphorus sulfur, argyrodite), and amorphous sulfide), a halide solid electrolyte, a nitride solid electrolyte, and a hydride solid electrolyte.

As an example, the composite solid-state electrolyte is formed by adding an inorganic solid-state electrolyte filler to the polymer solid electrolyte.

In some embodiments, the electrode assembly 10 is of a wound structure. Illustratively, the positive electrode plate and the negative electrode plate are wound to form a cylindrical wound structure.

In some embodiments, the electrode assembly 10 includes an electrode main body 11, a first tab 12, and a second tab 13. The first tab 12 and the second tab 13 have opposite polarities. One of the first tab 12 and the second tab 13 is a positive electrode tab, and the other is a negative electrode tab.

As an example, the electrode assembly 10 includes a positive electrode plate and a negative electrode plate. The portions, which contain the active substance, of the positive electrode plate and the negative electrode plate constitute the electrode main body 11 of the electrode assembly 10, the portion, which does not contain the active substance, of the positive electrode plate constitutes the positive electrode tab, and the portion, which does not contain the active substance, of the negative electrode plate constitutes the negative electrode tab. The positive electrode tab and the negative electrode tab may be located together at one end of the electrode main body 11 or respectively at two ends of the electrode main body 11. During the charging and discharging process of the battery, the positive electrode active substance and the negative electrode active substance react with the electrolyte.

In some embodiments, the cylindrical battery cell 7 further includes a first electrode lead-out part 7a and a second electrode lead-out part 7b. The first electrode lead-out part 7a is electrically connected to the first tab 12, and the second electrode lead-out part 7b is electrically connected to the second tab 13. The first electrode lead-out part 7a and the second electrode lead-out part 7b are insulated from each other.

The first electrode lead-out part 7a and the second electrode lead-out part 7b are configured to be connected to an external circuit to achieve the charging or discharging of the cylindrical battery cell 7. Illustratively, when a plurality of cylindrical battery cells 7 are assembled into a group, the first electrode lead-out part 7a and the second electrode lead-out part 7b are configured to be connected to a busbar component.

The first electrode lead-out part 7a may be an electrode terminal 30 disposed on the housing 20. The electrode terminal 30 and the housing 20 are independently formed and assembled together during the production process of the cylindrical battery cell 7. As an example, the electrode terminal 30 is disposed on the end cover 22 or the housing body 21 in an insulated manner.

Alternatively, the first electrode lead-out part 7a may also be a portion of the housing 20. For example, the first electrode lead-out part 7a may be the end cover 22 of the housing 20, or the first electrode lead-out part 7a may be an end wall 211, which abuts against the end cover 22, of the housing body 21.

The second electrode lead-out part 7b may be an electrode terminal 30 disposed on the housing 20. Alternatively, the second electrode lead-out part 7b may be a portion of the housing 20. For example, the second electrode lead-out part 7b may be the end cover 22 of the housing 20, or the second electrode lead-out part 7b may be the end wall 211, which abuts against the end cover 22, of the housing body 21.

In some embodiments, the first electrode lead-out part 7a is the electrode terminal 30, the second electrode lead-out part 7b is the end wall 211 of the housing body 21, and the electrode terminal 30 is disposed on the end wall 211 in an insulated manner. In some other examples, the second electrode lead-out part 7b is the electrode terminal 30, the first electrode lead-out part 7a is the end wall 211 of the housing body 21, and the electrode terminal 30 is disposed on the end wall 211 in an insulated manner.

In some embodiments, the cylindrical battery cell 7 further includes a current collecting member 40 that electrically connects the first tab 12 to the first electrode lead-out part 7a.

The current collecting member 40 may be directly connected to the first electrode lead-out part 7a. For example, the current collecting member 40 may be welded to the first electrode lead-out part 7a, so as to achieve an electrical connection between the current collecting member 40 and the first electrode lead-out part 7a.

Alternatively, the current collecting member 40 may be indirectly connected to the first electrode lead-out part 7a through other parts. For example, the first electrode lead-out part 7a is the end wall 211 of the housing body 21, and the current collecting member 40 may be connected to a side wall 212 of the housing body 21, so as to be electrically connected to the end wall 211 through the side wall 212.

In some embodiments, the second electrode lead-out part 7b may be directly connected to the second tab 13, so as to achieve an electrical connection between the second tab 13 and the electrode lead-out part. Alternatively, the second electrode lead-out part 7b may be electrically connected to the second tab 13 through another current collecting member 40.

In some embodiments, the first electrode lead-out part 7a is the electrode terminal 30.

In some embodiments, the electrode terminal 30 includes a terminal main body 31. A terminal recess 311 is provided on a side, distal to the current collecting member 40, of the terminal main body 31. A bottom wall of the terminal recess 311 is welded to the current collecting member 40.

Illustratively, when the terminal main body 31 and the current collecting member 40 are welded, the laser may irradiate the bottom wall of the terminal recess 311 from the outer side to achieve external welding.

In some embodiments, the electrode terminal 30 further includes a cover plate 32. The cover plate 32 is fixed to the terminal main body 31 and is configured to cover the terminal recess 311 from the outer side.

In some embodiments, the cylindrical battery cell 7 includes the housing 20, the first electrode lead-out part 7a, the electrode assembly 10, and the current collecting member 40.

The first electrode lead-out part 7a is disposed in the housing 20. The electrode assembly 10 is accommodated in the housing 20. The electrode assembly 10 is of a wound structure and includes an electrode main body 11 and a first tab 12 led out from an end part of the electrode main body 11.

The current collecting member 40 is electrically connected to the first electrode lead-out part 7a. The current collecting member 40 is located on a side, distal to the electrode main body 11, of the first tab 12. The current collecting member 40 is welded to the first tab 12 and forms a plurality of weld mark groups 50, and the plurality of weld mark groups 50 are spaced apart from each other in a circumferential direction V of the current collecting member 40.

Each weld mark group 50 includes at least one first weld mark 51 and at least one second weld mark 52; in a direction from an exterior of the electrode assembly 10 toward a central axis C of the electrode assembly 10, the first weld mark 51 and the second weld mark 52 extend linearly, the first weld mark 51 is provided with a first end 511 proximal to the central axis C and a second end 512 distal to the central axis C, and the second weld mark 52 is provided with a third end 521 proximal to the central axis C and a fourth end 522 distal to the central axis C. An extension length L1 of the first weld mark 51 is greater than an extension length L2 of the second weld mark 52, and a distance between the third end 521 and the second end 512 is less than a distance between the third end 521 and the first end 511.

The central axis C of the electrode assembly 10 is a virtual line. As an example, both the positive electrode plate and the negative electrode plate may be wound around the central axis C.

As an example, an axial direction Z of the cylindrical battery cell 7 may be parallel to the central axis C of the electrode assembly 10. The first tab 12 is led out from one end of the electrode main body 11 in the axial direction Z.

As an example, the circumferential direction V of the current collecting member 40 is perpendicular to the central axis C of the electrode assembly 10.

In the circumferential direction V of the current collecting member 40, the plurality of weld mark groups 50 may be arranged at equal angular intervals or at unequal angular intervals. Optionally, the plurality of weld mark groups 50 are arranged at equal angular intervals. Further optionally, the plurality of weld mark groups 50 are rotationally symmetric about the central axis C.

Each weld mark group 50 may include one or more first weld marks 51, and each weld mark group 50 may include one or more first weld marks 51. As an example, the number of first weld marks 51 is the same for the plurality of weld mark groups 50, and the number of second weld marks 52 is the same for the plurality of weld mark groups 50.

The first weld mark 51 and the second weld mark 52 extend linearly. Illustratively, the first weld mark 51 may extend in a straight line or a curved line; and the second weld mark 52 may extend in a straight line or a curved line.

As an example, the direction from the exterior of the electrode assembly 10 toward the central axis C of the electrode assembly 10 is perpendicular to the central axis C.

When the first weld mark 51 extends from the first end 511 to the second end 512, the first weld mark 51 generally tends to gradually move away from the central axis C. In other words, when the first weld mark 51 extends from the second end 512 to the first end 511, the first weld mark 51 generally tends to gradually move toward the central axis C.

Illustratively, when the current collecting member 40 and the first tab 12 are welded, welding may be performed from the first end 511 to the second end 512, or from the second end 512 to the first end 511.

When the second weld mark 52 extends from the third end 521 to the fourth end 522, the second weld mark 52 generally tends to gradually move away from the central axis C. In other words, when the second weld mark 52 extends from the fourth end 522 to the third end 521, the second weld mark 52 generally tends to gradually move toward the central axis C.

Illustratively, when the current collecting member 40 and the first tab 12 are welded, welding may be performed from the third end 521 to the fourth end 522, or from the fourth end 522 to the third end 521.

In the embodiments of the present application, the first weld mark 51 has a large extension length, enabling it to simultaneously transmit the current from a portion, proximal to the central axis C, of the first tab 12 and the current from a portion, distal to the central axis C, of the first tab 12. The portion, distal to the central axis C, of the first tab 12 has a larger circumferential length and requires a larger current passage area. The second weld mark 52 is disposed outwardly relative to the first end 511, and can transmit the current from the portion, distal to the central axis C, of the first tab 12 together with the first weld mark 51, thereby improving the current passage capacity, reducing the temperature rise, improving the fast charging capability of the battery cell, and improving the cycle performance and reliability of the battery cell.

The farther the first tab is away from the central axis C, the larger the dimensions of the first tab 12 and the current collecting member 40 in the circumferential direction V are. Disposing the second weld mark 52, which has a smaller extension length, outwardly can increase the distance between the first weld mark 51 and the second weld mark 52, thereby reducing heat accumulation during the welding process, reducing the temperature rise, and improving the reliability. The portion, proximal to the central axis C, of the first tab 12 has a smaller circumferential length and is located closer to the first end 511. Therefore, the portion, proximal to the central axis C, of the first tab 12 requires a smaller current passage area, and the second weld mark 52 can be shortened to reduce heat generation during welding, simplify the welding process, and improve the reliability.

In the embodiments of the present application, by using two types of weld marks, namely the first weld mark 51 and the second weld mark 52 having different extension lengths, and by arranging the second weld mark 52 in an outward region of the first tab 12, the current passage area between the current collecting member 40 and the tab is increased, heat accumulation during the formation of the weld marks is reduced, the temperature rise is reduced, and the reliability and cycle performance of the battery cell are improved.

Disposing the second weld mark 52 outwardly can increase the distance between the first weld mark 51 and the second weld mark 52, thereby reducing the risk of spatter caused by welding the current collecting member 40 at the same position twice.

In some embodiments, during the cycling of the battery cell, the electrode assembly 10 may expand. When the electrode assembly 10 expands, the outward region of the first tab 12 is subjected to a large tensile force. In the embodiments of the present application, by providing both the first weld mark 51 and the second weld mark 52 in the outward region of the first tab 12, the force on each individual weld mark can be reduced, reducing the risk of weld mark tearing and improving the reliability.

In some embodiments, the current collecting member 40 and the first tab 12 are welded by laser welding. Illustratively, during welding, the laser irradiates a surface, facing away from the first tab 12, of the current collecting member 40.

In some embodiments, the first tab 12 is wound to form N winding turns. Illustratively, the first tab 12 is wound around the central axis C.

As an example, in a winding direction X of the first tab 12, each turn of the first tab 12 starting from a winding start end 121 is counted as one winding turn. A head end of the first winding turn is the winding start end of the first tab 12, and a tail end of the first winding turn is a head end of the second winding turn.

Except for the last winding turn, all other winding turns are full turns. The last winding turn is not required to be a full turn. For example, the last winding turn may be a 1/4 turn, a 1/2 turn, or a 3/4 turn.

Using the first tab 12 of the wound structure can increase the current passage area of the first tab 12 and improve the fast charging capability of the battery cell.

Some winding turns proximal to the central axis C have smaller circumferential lengths and require smaller current passage areas. Therefore, the first weld mark 51 can be used to conduct the current in the winding turns proximal to the central axis C. Some winding turns proximal to the central axis C have smaller circumferential lengths and require larger current passage areas. Therefore, the first weld mark 51 and the second weld mark 52 can be used simultaneously to conduct the current in the winding turns distal to the central axis C.

In some embodiments, end parts of the plurality of winding turns distal to the electrode main body 11 are bent to form an overlapping region. In the overlapping region, the first tab 12 is of a multi-layer structure in the axial direction Z.

The multi-layer structure is welded to the current collecting member 40 to form the plurality of weld mark groups 50. Welding the overlapping region to the current collecting member 40 can both reduce the risk of false welding and increase the welding area between the first tab 12 and the current collecting member 40, thereby improving the current passage capacity.

In some embodiments, the first tab 12 is bent by a flattening process or a smoothing process to form the overlapping region. Illustratively, the first tab 12 shown in FIG. 7 is a first tab 12 before flattening or a first tab 12 before smoothing.

In some embodiments, the first tab 12 is of a cylindrical structure.

In some embodiments, the first tab 12 is wound to form N winding turns, the second weld mark 52 is connected to M winding turns, and 0.05 ≤ M/N ≤ 0.4.

As an example, M/N is 0.05, 0.1, 0.15, 0.2, 0.25, 0.3, 0.35, or 0.4.

Illustratively, M is an integer.

Defining M/N to be greater than or equal to 0.05 allows the second weld mark 52 to be connected to a relatively large number of winding turns, increasing the current passage area between the winding turns distal to the central axis C and the current collecting member 40, improving the current passage capacity, reducing the temperature rise, and improving the cycle performance of the cylindrical battery cell 7. Defining M/N to be less than or equal to 0.4 increases the distance between the third end 521 and the central axis C and the distance between the third end 521 and the first end 511, reducing heat accumulation during welding and improving the reliability.

In some embodiments, 0.1 ≤ M/N ≤ 0.2.

In some embodiments, the first weld mark 51 is connected to K winding turns. M < K < N. Illustratively, K is an integer.

In some embodiments, 0.1 ≤ M/K ≤ 0.5. Optionally, 0.2 ≤ K/M ≤ 0.4.

In some embodiments, the first weld mark 51 and the second weld mark 52 both extend along a straight line.

The first weld mark 51 is a linear weld mark, and the second weld mark 52 is a linear weld mark.

It should be noted here that a straight line includes not only an absolutely straight line but also a line that is substantially straight as commonly understood in engineering. For example, due to process errors, local fluctuations may occur in the weld mark during formation.

The first weld mark 51 may extend in a radial direction, i.e., an extension line of the first weld mark 51 passes through the central axis C. Certainly, the extension direction of the first weld mark 51 may also intersect with the radial direction, i.e., the extension line of the first weld mark 51 does not pass through the central axis C.

The second weld mark 52 may extend in a radial direction, i.e., an extension line of the second weld mark 52 passes through the central axis C. Certainly, the extension direction of the second weld mark 52 may also intersect with the radial direction, i.e., the extension line of the second weld mark 52 does not pass through the central axis C.

Using the linear first weld mark 51 and second weld mark 52 can simplify the welding process and reduce the assembly difficulty of the battery cell.

In some embodiments, the first weld mark 51 extends in a radial direction of the current collecting member 40. Illustratively, the extension line of the first weld mark 51 passes through the central axis C.

Given a certain extension length, configuring the first weld mark 51 to extend in the radial direction of the current collecting member 40 can improve the current passage capacity between the current collecting member 40 and the first tab 12. Illustratively, the first tab 12 is wound to form a plurality of winding turns. Configuring the first weld mark 51 to extend in the radial direction of the current collecting member 40 allows the first weld mark 51 to be connected to more winding turns.

In some embodiments, the second weld mark 52 extends in the radial direction of the current collecting member 40.

Given a certain extension length, configuring the second weld mark 52 to extend in the radial direction of the current collecting member 40 can improve the current passage capacity between the current collecting member 40 and the second tab 13. Illustratively, the second tab 13 is wound to form a plurality of winding turns. Configuring the second weld mark 52 to extend in the radial direction of the current collecting member 40 allows the second weld mark 52 to be connected to more winding turns.

In some embodiments, 3 to 8 weld mark groups 50 are provided. Optionally, 4 to 6 weld mark groups 50 are provided.

In some embodiments, the weld mark group 50 includes two first weld marks 51. Certainly, the weld mark group 50 may also include three or more first weld marks 51.

The shapes of the two weld marks in the weld mark group 50 may be the same or different.

In the weld mark group 50, the second weld mark 52 may be located between the two first weld marks 51, or may be located on the same side of the two first weld marks 51.

By providing the two first weld marks 51, the current passage capacity between the current collecting member 40 and the first tab 12 can be further improved. By increasing the number of first weld marks 51 in the weld mark group 50, the required number of weld mark groups 50 can be reduced.

In some embodiments, in the circumferential direction V of the current collecting member 40, the third end 521 is located between two adjacent first weld marks 51.

Illustratively, when viewed in a direction perpendicular to the central axis C, a circle centered on the central axis C and passing through the third end 521 intersects with two first weld marks 51 of one weld mark group 50.

Using the space between the two first weld marks 51 to dispose the second weld mark 52 can improve the space utilization rate. Compared with a solution where the second weld mark 52 is disposed on an outer side of the two first weld marks 51, the embodiments of the present application can increase the spacing between the two first weld marks 51, reduce heat accumulation, and reduce the risk of repeated welding.

In some embodiments, the weld mark group 50 includes one second weld mark 52.

In some embodiments, in the circumferential direction V of the current collecting member 40, the fourth end 522 is located between two adjacent first weld marks 51.

In the radial direction of the current collecting member 40, the fourth end 522 does not extend outward beyond a circle centered on the central axis C and passing through the second end 512.

During the welding of the current collecting member 40 and the first tab 12, the fourth end 522 of the second weld mark 52 can take the second end 512 of the first weld mark 51 as a reference, thereby reducing the risk of welding outside the current collecting member 40, and improving the reliability.

In some embodiments, in the circumferential direction V of the current collecting member 40, the second weld mark 52 is entirely located between the first weld marks 51.

In some embodiments, a minimum spacing between the fourth end 522 and the central axis C is less than or equal to a minimum spacing between the second end 512 and the central axis C.

During the welding of the current collecting member 40 and the first tab 12, the fourth end 522 of the second weld mark 52 can take the second end 512 of the first weld mark 51 as a reference, thereby reducing the risk of welding outside the current collecting member 40, and improving the reliability.

In some embodiments, in the circumferential direction V of the current collecting member 40, a maximum spacing D2 between two adjacent weld mark groups 50 is greater than a maximum dimension D3 of the weld mark group 50.

In the embodiments of the present application, adjacent weld mark groups 50 are spaced apart by a relatively large distance. In other words, in addition to the region requiring welding, the current collecting member 40 also has a relatively large region against which an external device can press. When the current collecting member 40 and the first tab 12 are welded, the external device may press the current collecting member 40 tightly against the first tab 12, so as to enable the current collecting member 40 to be attached to the first tab 12 during the welding process, reducing the risk of false welding.

In some embodiments, in the circumferential direction V of the current collecting member 40, the spacing between two adjacent weld mark groups 50 is greater than the spacing between two first weld marks 51 of the weld mark group 50.

It should be noted here that the comparison between the spacing between two adjacent weld mark groups 50 and the spacing between two first weld marks 51 of the weld mark group 50 is performed with the same circle as a reference.

Illustratively, a circle centered on the central axis C and having a radius R passes through the first weld marks 51 of the weld mark group 50. Then, the arc length of a portion of the circle located between two adjacent weld mark groups 50 may be the spacing between the two adjacent weld mark groups 50 in the circumferential direction V of the current collecting member 40, and the arc length of a portion of the circle located between outer edges of two first weld marks 51 of the weld mark group 50 is the spacing between the two first weld marks 51 of the weld mark group 50. When comparison is performed by using any circle centered on the central axis C and passing through the first weld mark 51 as a reference, the following condition is met: in the circumferential direction V of the current collecting member 40, the spacing between two adjacent weld mark groups 50 is greater than the spacing between two first weld marks 51 of the weld mark group 50.

When the current collecting member 40 and the first tab 12 are welded, the external device may abut against the portion between adjacent weld mark groups 50 and press the current collecting member 40 tightly against the first tab 12, so as to enable the current collecting member 40 to be attached to the first tab 12 during the welding process, reducing the risk of false welding.

In some embodiments, the first weld mark 51 extends in a radial direction of the current collecting member 40. The current collecting member 40 includes a first sector-shaped region 41 and a second sector-shaped region 42, and in the circumferential direction V of the current collecting member 40, the first sector-shaped region 41 is located between two first weld marks 51 of the weld mark group 50, and the second sector-shaped region 42 is located between adjacent weld mark groups 50. A central angle α of the second sector-shaped region 42 is greater than a central angle β of the first sector-shaped region 41.

As an example, in FIG. 8, a dashed line F1, a dashed line F2, and two first weld marks 51 of the weld mark group 50 define the first sector-shaped region 41. Illustratively, the dashed line F1 is an arc segment on a circle centered on the central axis C and passing through the first end 511, and the dashed line F2 is an arc segment on a circle centered on the central axis C and passing through the second end 512.

As an example, in FIG. 8, a dashed line F3, a dashed line F4, and two adjacent weld mark groups 50 define the second sector-shaped region 42. Illustratively, the dashed line F3 is an arc segment on a circle centered on the central axis C and passing through the first end 511, and the dashed line F4 is an arc segment on a circle centered on the central axis C and passing through the second end 512.

When the current collecting member 40 and the first tab 12 are welded, the external device may abut against the second sector-shaped region 42 and press the current collecting member 40 tightly against the first tab 12, so as to enable the current collecting member 40 to be attached to the first tab 12 during the welding process, reducing the risk of false welding. The second sector-shaped region 42 has a relatively large area, which can increase the pressure-bearing area of the current collecting member 40 and improve the welding stability.

In some embodiments, D2 is the arc length of the dashed line F4.

In some embodiments, D3 is: the arc length of the dashed line F2 + 2 × W1. W1 is a width of the first weld mark.

In some embodiments, a portion of the first sector-shaped region 41 is welded to the first tab 12 and forms the second weld mark 52. Since the first sector-shaped region 41 has a smaller central angle, providing the shorter second weld mark 52 in the first sector-shaped region 41 can increase the current passage capacity while maintaining the spacing between the first weld mark 51 and the second weld mark 52.

In some embodiments, a plurality of first sector-shaped regions 41 and a plurality of second sector-shaped regions 42 are provided. The plurality of first sector-shaped regions 41 and the plurality of second sector-shaped regions 42 are alternately arranged in the axial direction Z of the current collecting member 40.

In some embodiments, a ratio of the extension length L2 of the second weld mark 52 to the extension length L1 of the first weld mark 51 is 0.1 to 0.5.

As an example, L2/L1 is 0.1, 0.2, 0.3, 0.4, or 0.5.

Defining L2/L1 to be greater than or equal to 0.1 can improve the current passage capacity of the second weld mark 52 and reduce the temperature rise of the battery cell during cycling. Defining L2/L1 to be less than or equal to 0.5 can ensure that a minimum spacing between the second weld mark 52 and the first weld mark 51 meets requirements.

In some embodiments, a width W2 of the second weld mark 52 is 0.5 to 2 times the width W1 of the first weld mark 51.

As an example, W2/W1 is 0.5, 0.8, 1, 1.5, 1.8, or 2.

Defining W2/W1 to be greater than or equal to 0.5 can provide the second weld mark 52 with a relatively large current passage area, reducing the temperature rise of the battery cell during cycling. Defining W2/W1 to be less than or equal to 2 saves space occupied by the second weld mark 52 in the circumferential direction V of the current collecting member 40, increases the minimum spacing between the second weld mark 52 and the first weld mark 51, reduces heat accumulation during the welding process, and improves the reliability.

In some embodiments, W1 is 0.5 mm to 3 mm. Optionally, W1 is 0.5 mm, 1 mm, 1.5 mm, 2 mm, 2.5 mm, or 3 mm.

In some embodiments, W2 is 0.5 mm to 3 mm. Optionally, W2 is 0.5 mm, 1 mm, 1.5 mm, 2 mm, 2.5 mm, or 3 mm.

In some embodiments, the extension length L2 of the second weld mark 52 is greater than or equal to 2 mm.

In some embodiments, a minimum spacing D1 between the third end 521 and the first weld mark 51 is greater than or equal to 0.5 times the width W1 of the first weld mark 51.

During welding, the width W1 of the first weld mark 51 is related to both welding power and heat generation during welding. The embodiments of the present application define D1/W1 to be greater than or equal to 0.5 to reduce heat accumulation during welding, reduce the risk of spatter caused by the joint between the first weld mark 51 and the second weld mark 52, and improve the reliability.

In some embodiments, at least a portion of the first electrode lead-out part 7a is located on a side, facing away from the first tab 12, of the current collecting member 40 and abuts against the current collecting member 40. The plurality of weld mark groups 50 are arranged along an outer periphery of the first electrode lead-out part 7a, and each weld mark group 50 is spaced apart from the first electrode lead-out part 7a.

Due to the welding process, the flatness of the weld mark groups 50 is relatively poor. In the embodiments of the present application, the weld mark groups 50 are disposed to avoid the first electrode lead-out part 7a, such that the current collecting member 40 can be attached to the first electrode lead-out part 7a, thereby improving the stability of the connection between the current collecting member 40 and the first electrode lead-out part 7a.

In some embodiments, the housing 20 includes a wall part, and the first electrode lead-out part 7a is an electrode terminal 30 disposed on the wall part in an insulated manner.

As an example, the wall part may be the end wall 211 of the housing body 21 or the end cover 22. Optionally, the wall part is the end wall 211.

In another embodiment, the housing 20 includes a housing body 21 and an end cover 22. The housing body 21 is provided with an opening, the end cover 22 lids the opening, and the first electrode lead-out part 7a is at least a portion of one of the housing body 21 and the end cover 22.

Optionally, the first electrode lead-out part 7a is the end wall 211 of the housing body 21. Alternatively, the first electrode lead-out part 7a is the end cover 22.

In some embodiments, the second tab 13 is welded to another current collecting member. Illustratively, the welding manner between the second tab 13 and the current collecting member is the same as the welding manner between the first tab 12 and the current collecting member 40, i.e., the second tab 13 is welded to the current collecting member and forms a weld mark group with a combination of long and short weld marks.

In some embodiments, the height of the housing 20 is 1.3 to 4 times the diameter of the housing 20. Illustratively, the height of the housing 20 may be the dimension of the housing 20 in the axial direction Z.

Optionally, the height of the housing 20 is 1.3 times, 1.4 times, 1.5 times, 1.6 times, 1.7 times, 1.8 times, 1.9 times, 2.0 times, 2.1 times, 2.2 times, 2.3 times, 2.4 times, 2.5 times, 2.6 times, 2.7 times, 2.8 times, 2.9 times, 3.0 times, 3.1 times, 3.2 times, 3.3 times, 3.4 times, 3.5 times, 3.6 times, 3.7 times, 3.8 times, 3.9 times, or 4.0 times the diameter of the housing 20.

When the housing 20 satisfies the above dimension requirements, the structural stability of the housing 20 can be made high, which can improve the use reliability of the cylindrical battery cell.

In some embodiments, the height of the housing 20 is 1.5 to 2.5 times the diameter of the housing 20.

In some embodiments, the height of the housing 20 is 50 mm to 150 mm. For example, the height of the housing 20 is 50 mm, 55 mm, 60 mm, 65 mm, 70 mm, 75 mm, 80 mm, 85 mm, 90 mm, 95 mm, 100 mm, 105 mm, 110 mm, 115 mm, 120 mm, 125 mm, 130 mm, 135 mm, 140 mm, 145 mm, or 150 mm.

Optionally, the height of the housing 20 is 60 mm to 100 mm.

In some embodiments, the diameter of the housing 20 is 40 mm to 80 mm. For example, the diameter of the housing 20 is 40 mm, 45 mm, 50 mm, 55 mm, 60 mm, 65 mm, 70 mm, 75 mm, or 80 mm.

Optionally, the diameter of the housing 20 is 40 mm to 60 mm.

FIG. 10 is a schematic diagram of an electrode assembly and a current collecting member according to some other embodiments of the present application.

Referring to FIG. 10, in some embodiments, the weld mark group 50 further includes a third weld mark 53, and the third weld mark 53 connects the first ends 511 of two first weld marks 51. The third end 521 is spaced apart from the third weld mark 53.

The two first weld marks 51 and the third weld mark 53 are integrally connected, which can increase the current passage area and reduce the temperature rise of the cylindrical battery cell 7 during cycling. Compared with a solution where two first weld marks 51 are formed in two welding processes, the embodiments of the present application allow the two first weld marks 51 and the third weld mark 53 to be completed in a single welding process, thereby reducing the risk of welding spatter and improving the welding efficiency.

In some embodiments, at least a portion of the third weld mark 53 is in a circular arc shape. The circular arc shape allows for a smoother transition in the welding direction, reducing the risk of welding spatter and improving the welding quality.

In some embodiments, the two first weld marks 51 and the third weld mark 53 approximately form a U-shaped weld mark.

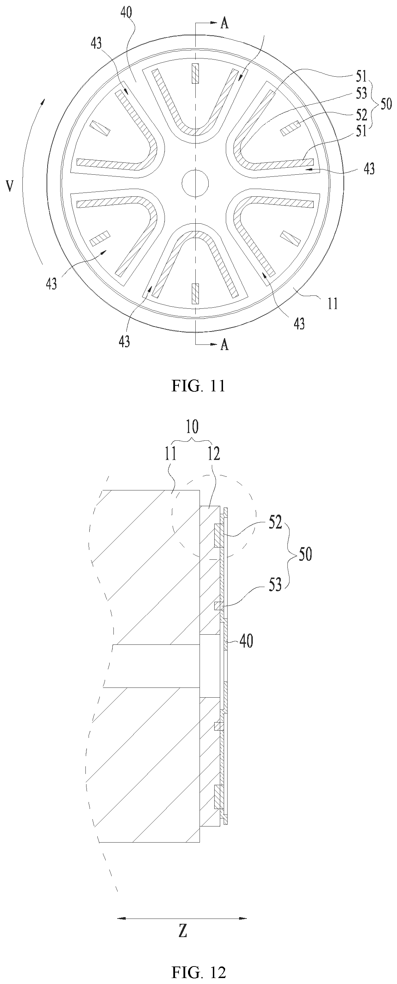

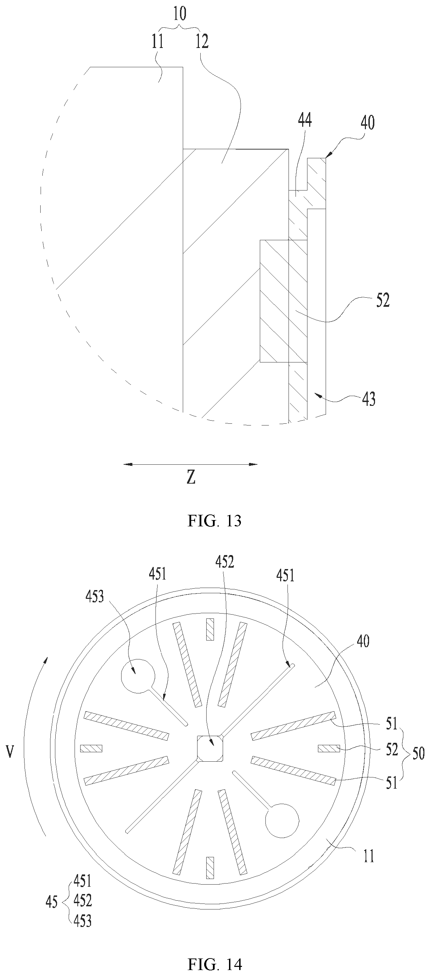

FIG. 11 is a schematic diagram of an electrode assembly and a current collecting member according to still some other embodiments of the present application; FIG. 12 is a cross-sectional schematic view taken along an A-A direction in FIG. 11; and FIG. 13 is an enlarged schematic view of a circled portion in FIG. 12.

Referring to FIGs. 11 to 13, in some embodiments, a plurality of recesses 43 are provided on a side, facing away from the first tab 12, of the current collecting member 40, and the plurality of recesses 43 are spaced apart from each other in the circumferential direction V of the current collecting member 40. A bottom wall of each recess 43 is welded to the first tab 12 and forms the weld mark group 50.

During welding, the recess 43 can be used for positioning, facilitating the welding device in capturing the welding position and improving the welding efficiency. The external device may press against a non-recessed region of the current collecting member 40, so as to enable the current collecting member 40 to be attached to the first tab 12 during the welding process, reducing the risk of false welding.

In some embodiments, a plurality of protrusions 44 are provided on a side, facing the first tab 12, of the current collecting member 40, and the plurality of protrusions 44 are disposed in a one-to-one correspondence with the plurality of recesses 43. The bottom wall of the recess 43 may be a portion of the current collecting member 40 located between a top surface of the protrusion 44 and a bottom surface of the recess 43.

The protrusion 44 may abut against the first tab 12. When the current collecting member 40 is pressed, the protrusion 44, due to its smaller area, is more easily attached to the first tab 12, thereby reducing the gap between the first tab 12 and the bottom wall of the recess 43 and reducing the risk of false welding.

FIG. 14 is a schematic diagram of an electrode assembly and a current collecting member according to some embodiments of the present application.

The current collecting member 40 is provided with a channel 45, and the channel 45 penetrates through the current collecting member 40 in a thickness direction of the current collecting member 40. In the circumferential direction V of the current collecting member 40, at least a portion of the channel 45 is located between adjacent weld mark groups 50.

The channel 45 may be strip-shaped, circular, rectangular, or in other shapes.

In the case of an accidental thermal runaway of the cylindrical battery cell 7, substances generated by the reaction of the electrode assembly 10 can pass through the current collecting member 40 via the channel 45, so as to be promptly discharged to the exterior of the housing 20, reducing the risk of explosion. Forming the channel 45 in a portion, located between the weld mark groups 50, of the current collecting member 40 allows both the current passage capacity and the gas discharge capacity of the current collecting member 40 to be taken into account.

In some embodiments, the cylindrical battery cell 7 includes a pressure relief mechanism disposed in the housing 20. Illustratively, the pressure relief mechanism is located on a side, distal to the first tab 12, of the current collecting member 40.

In some embodiments, the channel 45 includes a linear channel 451 extending linearly. Optionally, the linear channel 451 extends in the radial direction of the current collecting member 40.

In some embodiments, the channel 45 includes a plurality of linear channels 451, and the plurality of linear channels 451 and the plurality of weld mark groups 50 are alternately arranged in the circumferential direction V of the current collecting member 40.

In some embodiments, the channel 45 includes a first hole 452. The first hole 452 is located in the middle part of the current collecting member 40, and the central axis C passes through the first hole 452. Optionally, the first hole 452 is a square hole or a circular hole.

The hole diameter of the first hole 452 is greater than the width of the linear channel 451.

Illustratively, for a non-circular hole, the hole diameter is the diameter of the circumscribed circle of the non-circular hole.

In some embodiments, the first hole 452 is in communication with at least two linear channels 451.

In some embodiments, the channel 45 further includes a second hole 453. The second hole 453 is located between adjacent weld mark groups 50 in the circumferential direction V of the current collecting member 40.

In some embodiments, the second hole 453 is in communication with an end, distal to the central axis C, of the linear channel 451. The hole diameter of the second hole 453 is greater than the width of the linear channel 451.

In some embodiments, some of the linear channels 451 are in communication with the first hole 452, and others of the linear channels 451 are in communication with the second hole 453.

In some embodiments, four linear channels 451 are provided. Two linear channels 451 are on the same straight line, with the first hole 452 being located between the two linear channels 451. The remaining two linear channels 451 are spaced apart from the first hole 452, and the second hole 453 is provided on an end, distal to the first hole 452, of each linear channel 451.

According to some embodiments of the present application, the present application further provides a battery. The battery includes a plurality of cylindrical battery cells 7 according to any one of the above embodiments.

According to some embodiments of the present application, the present application further provides an electric device. The electric device includes the cylindrical battery cell 7 according to any one of the above embodiments. The cylindrical battery cell 7 is configured to provide electric energy for the electric device. The electric device may be any one of the aforementioned devices or systems that use the cylindrical battery cell 7.

Referring to FIGs. 4 to 9, the embodiments of the present application provide a cylindrical battery cell 7. The cylindrical battery cell includes a housing 20, an electrode terminal 30, an electrode assembly 10, and two current collecting members 40.

The electrode assembly 10 is accommodated in the housing 20. The electrode assembly 10 is of a wound structure and includes an electrode main body 11, a first tab 12, and a second tab 13. The first tab 12 and the second tab 13 have opposite polarities and are respectively led out from two ends of the electrode main body 11.

The housing 20 includes a housing body 21 and an end cover 22. The housing body 21 is provided with an opening, and the end cover 22 is configured to lid the opening. The housing body 21 includes an end wall 211 and a side wall 212, the end wall 211 is disposed opposite to the end cover 22, and the side wall 212 surrounds the end wall 211 and connects the end wall 211 and the end cover 22. The electrode terminal 30 is disposed on the end wall 211.

One of the electrode terminal 30 and the end wall 211 is electrically connected to the first tab 12 via the current collecting member 40, and the other is electrically connected to the second tab 13.

The current collecting member 40 is located on a side, distal to the electrode main body 11, of the first tab 12. The current collecting member 40 is welded to the first tab 12 and forms a plurality of weld mark groups 50, and the plurality of weld mark groups 50 are spaced apart from each other in a circumferential direction V of the current collecting member 40. Optionally, in the circumferential direction V of the current collecting member 40, the plurality of weld mark groups 50 may be arranged at equal angular intervals.

Each weld mark group 50 includes two first weld marks 51 and one second weld mark 52. The first weld marks 51 and the two second weld marks 52 extend in a radial direction of the current collecting member 40. In the circumferential direction V of the current collecting member 40, the second weld mark 52 is located between the two first weld marks 51.

In a direction from an exterior of the electrode assembly 10 toward a central axis C of the electrode assembly 10, the first weld mark 51 and the second weld mark 52 extend linearly, the first weld mark 51 is provided with a first end 511 proximal to the central axis C and a second end 512 distal to the central axis C, and the second weld mark 52 is provided with a third end 521 proximal to the central axis C and a fourth end 522 distal to the central axis C. An extension length L1 of the first weld mark 51 is greater than an extension length L2 of the second weld mark 52, and a distance between the third end 521 and the second end 512 is less than a distance between the third end 521 and the first end 511.

The current collecting member 40 includes a first sector-shaped region 41 and a second sector-shaped region 42, and in the circumferential direction V of the current collecting member 40, the first sector-shaped region 41 is located between two first weld marks 51 of the weld mark group 50, and the second sector-shaped region 42 is located between adjacent weld mark groups 50. A central angle of the second sector-shaped region 42 is greater than a central angle of the first sector-shaped region 41.

It should be noted that, unless conflicting, the embodiments and features of the embodiments in the present application may be combined with each other.

Finally, it should be noted that the above embodiments are only used to illustrate the technical solutions of the present application, but not to limit them. Although the present application has been described in detail with reference to the foregoing embodiments, those of ordinary skill in the art should understand that they can still modify the technical solutions recorded in the foregoing embodiments or make equivalent substitutions for some of the technical features; however, these modifications or substitutions do not make the essence of the corresponding technical solutions deviate from the spirit and scope of the technical solutions in the embodiments of the present application.

It should be noted that, unless conflicting, the embodiments and features of the embodiments in the present application may be combined with each other.

Finally, it should be noted that the above embodiments are only used to illustrate the technical solutions of the present application, but not to limit them. Although the present application has been described in detail with reference to the foregoing embodiments, those of ordinary skill in the art should understand that they can still modify the technical solutions recorded in the foregoing embodiments or make equivalent substitutions for some of the technical features; however, these modifications or substitutions do not make the essence of the corresponding technical solutions deviate from the spirit and scope of the technical solutions in the embodiments of the present application.

## Claims

1. A cylindrical battery cell, comprising:
a housing;
a first electrode lead-out part disposed in the housing;
an electrode assembly accommodated in the housing, wherein the electrode assembly is of a wound structure and comprises an electrode main body and a first tab led out from an end part of the electrode main body; and
a current collecting member electrically connected to the first electrode lead-out part, wherein the current collecting member is located on a side, distal to the electrode main body, of the first tab, the current collecting member is welded to the first tab and forms a plurality of weld mark groups, and the plurality of weld mark groups are spaced apart from each other in a circumferential direction of the current collecting member;
wherein each weld mark group comprises at least one first weld mark and at least one second weld mark; in a direction from an exterior of the electrode assembly toward a central axis of the electrode assembly, the first weld mark and the second weld mark extend linearly, the first weld mark is provided with a first end proximal to the central axis and a second end distal to the central axis, and the second weld mark is provided with a third end proximal to the central axis and a fourth end distal to the central axis;
an extension length of the first weld mark is greater than an extension length of the second weld mark, and a distance between the third end and the second end is less than a distance between the third end and the first end.

2. The cylindrical battery cell according to claim 1, wherein the first weld mark and the second weld mark both extend along a straight line.

3. The cylindrical battery cell according to claim 1 or 2, wherein the first weld mark extends in a radial direction of the current collecting member; and/or
the second weld mark extends in the radial direction of the current collecting member.

4. The cylindrical battery cell according to any one of claims 1 to 3, wherein the weld mark group comprises two first weld marks.

5. The cylindrical battery cell according to claim 4, wherein in the circumferential direction of the current collecting member, the third end is located between two adjacent first weld marks.

6. The cylindrical battery cell according to claim 4 or 5, wherein in the circumferential direction of the current collecting member, the fourth end is located between two adjacent first weld marks.

7. The cylindrical battery cell according to any one of claims 4 to 6, wherein the weld mark group further comprises a third weld mark, and the third weld mark connects the first ends of two first weld marks;
the third end is spaced apart from the third weld mark.

8. The cylindrical battery cell according to claim 7, wherein at least a portion of the third weld mark is in a circular arc shape.

9. The cylindrical battery cell according to any one of claims 4 to 8, wherein the first weld mark extends in a radial direction of the current collecting member;
the current collecting member comprises a first sector-shaped region and a second sector-shaped region, and in the circumferential direction of the current collecting member, the first sector-shaped region is located between two first weld marks of the weld mark group, and the second sector-shaped region is located between adjacent weld mark groups;
a central angle of the second sector-shaped region is greater than a central angle of the first sector-shaped region.

10. The cylindrical battery cell according to any one of claims 1 to 9, wherein a ratio of the extension length of the second weld mark to the extension length of the first weld mark is 0.1 to 0.5.

11. The cylindrical battery cell according to any one of claims 1 to 10, wherein a minimum spacing between the fourth end and the central axis is less than or equal to a minimum spacing between the second end and the central axis.

12. The cylindrical battery cell according to any one of claims 1 to 11, wherein in the circumferential direction of the current collecting member, a maximum spacing between two adjacent weld mark groups is greater than a maximum dimension of the weld mark group.

13. The cylindrical battery cell according to any one of claims 1 to 12, wherein a plurality of recesses are provided on a side, facing away from the first tab, of the current collecting member, and the plurality of recesses are spaced apart from each other in the circumferential direction of the current collecting member;
a bottom wall of each recess is welded to the first tab and forms the weld mark group.

14. The cylindrical battery cell according to any one of claims 1 to 13, wherein at least a portion of the first electrode lead-out part is located on a side, facing away from the first tab, of the current collecting member and abuts against the current collecting member;
the plurality of weld mark groups are arranged along an outer periphery of the first electrode lead-out part, and each weld mark group is spaced apart from the first electrode lead-out part.

15. The cylindrical battery cell according to any one of claims 1 to 14, wherein a width of the second weld mark is 0.5 to 2 times a width of the first weld mark.

16. The cylindrical battery cell according to any one of claims 1 to 15, wherein a minimum spacing between the third end and the first weld mark is greater than or equal to 0.5 times a width of the first weld mark.

17. The cylindrical battery cell according to any one of claims 1 to 16, wherein the first tab is wound to form N winding turns, the second weld mark is connected to M winding turns, and 0.05 ≤ M/N ≤ 0.4.

18. The cylindrical battery cell according to any one of claims 1 to 17, wherein the housing comprises a wall part, and the first electrode lead-out part is an electrode terminal disposed on the wall part in an insulated manner; or
the housing comprises a housing body and an end cover, the housing body is provided with an opening, the end cover lids the opening, and the first electrode lead-out part is at least a portion of one of the housing body and the end cover.

19. The cylindrical battery cell according to any one of claims 1 to 18, wherein the current collecting member is provided with a channel, and the channel penetrates through the current collecting member in a thickness direction of the current collecting member;
in the circumferential direction of the current collecting member, at least a portion of the channel is located between adjacent weld mark groups.

20. The cylindrical battery cell according to any one of claims 1 to 19, wherein a height of the housing is 1.3 to 4 times a diameter of the housing.

21. The cylindrical battery cell according to any one of claims 1 to 20, wherein a height of the housing is 50 mm to 150 mm; and/or
a diameter of the housing is 40 mm to 80 mm.

22. A battery, comprising a plurality of cylindrical battery cells according to any one of claims 1 to 21.

23. An electric device, comprising the battery according to claim 22, wherein the battery is configured to provide electrical energy.
